# EUROPÄISCHE PATENTSCHRIFT

(11) **EP 1 955 672 B1**
(45) Veröffentlichungstag und Bekanntmachung des Hinweises auf die Patenterteilung: **19.09.2018**
(21) Anmeldenummer: 08001100.0
(22) Anmeldetag: 22.01.2008
(51) Int. Cl.: A61C 17/08

(54) **SAUGKANÜLE FÜR EINE DENTALE SAUGEINRICHTUNG**
SUCTION CANNULA FOR A DENTAL SUCTION DEVICE
CANULE D'ASPIRATION POUR UN DISPOSITIF D'ASPIRATION DENTAIRE

(30) Priorität: 06.02.2007 DE 102007006613
(43) Veröffentlichungstag der Anmeldung: 13.08.2008
(73) Patentinhaber: Dürr Dental SE, 74321 Bietigheim-Bissingen (DE)
(72) Erfinder: Wellmann, Peter, 74257 Untereisesheim (DE); Nonnenmacher, Eberhardt, 74379 Ingersheim (DE)
(74) Vertreter: Ostertag & Partner Patentanwälte mbB

(56) Entgegenhaltungen:
- EP-A- 0 152 390
- EP-A- 0 457 220
- EP-A- 1 752 110
- WO-A-96/31170
- DE-U1- 8 030 146
- US-A- 3 881 254

## Beschreibung

Die Erfindung betrifft eine Saugkanüle nach dem Oberbegriff des Anspruchs 1.

Eine vom Markt her bekannte Saugkanüle ist als rohrförmiges Kunststoffspritzgussteil hergestellt und ist zu lösbaren Anbringung an einer Saugeinrichtung vorgesehen. Zu diesem Zweck weist die Saugkanüle einen Kupplungsabschnitt auf, der eine dichte Steckverbindung mit einer korrespondierend geformten Kupplungsbuchse der Saugeinrichtung gewährleistet. An einem vom Kupplungsabschnitt abgewandten Endbereich der Saugkanüle ist eine Saugöffnung vorgesehen, die von einem verrundeten, wulstartigen Kragen berandet ist. Der Kragen gewährleistet, dass der zur Anwendung im Mundraum eines Patienten vorgesehene Abschnitt der Saugkanüle frei von scharfen Kanten ist, die eine Verletzung der Mundschleimhaut hervorrufen könnten.

Mit der bekannten Saugkanüle in Verbindung mit der dentalen Saugeinrichtung können während einer Behandlung Flüssigkeiten und/oder Feststoffpartikel aus dem Mundraum des Patienten abgesaugt werden. Um das Absaugen zu ermöglichen, stellt die Saugeinrichtung einen Unterdruck bereit, der ein Einströmen von Umgebungsluft, Flüssigkeiten und Feststoffpartikeln in die Saugkanüle bewirkt.

Der von der Saugeinrichtung bereitzustellende Unterdruck wird so gewählt, dass sowohl die gewünschte Absaugleistung gewährleistet ist, als auch ein Festsaugen der Saugkanüle an der Mundschleimhaut, wie sie bei flächiger Anlage der Saugöffnung an die Mundschleimhaut auftreten kann, vermieden wird. Eine solches Festsaugen mindert die Saugleistung und erschwert die Handhabung der Saugkanüle.

Bei bekannten Saugkanülen kann es vorkommen, dass bei Unterbrechung des Luftfstromes in der Kanüle in der letzteren befindliche Flüssigkeit in den Mund des Patienten zurückfliesst (Reflux). Dies ist unerwünscht.

Daher ist aus der EP 0 457 220 A1 eine Saugkanüle bekannt, bei der im Handgriff ein mit einem Finger des Bedieners verschließbares Loch als Nebenluftkanal vorgesehen ist. Eine ähnliche Saugkanüle ist aus der DE 80 30 146 U1 bekannt.

Ferner ist aus der US 3,881,254 A ein Speichelsauger bekannt, der an seinem distalen Ende einen Düsenkopf aufweist, der zusammen mit einem Kanülenrohr Nebenluftkanäle ausbildet, die bei der Verwendung des Speichelsaugers im Mundraum angeordnet sind.

Aus der WO 96/31170 ist eine Saugkanüle bekannt, bei welcher über einen Ringspalt zwischen einer auf ein Rohr aufgesetzten Kappe und der Rohraußenfläche Luft angesaugt wird, um an der Spitze der Saugkanüle eine Spülwirkung zu erzielen.

Aus der EP 0 152 390 A2 ist eine Saugkanüle bekannt, die ein automatisches Entlastungsventil als Nebenluftkanal aufweist.

Ferner ist aus der nachveröffentlichten EP 173 110 A2 ein Adapter für eine Saugkanüle bekannt, der zusammen mit der Kupplungsbuchse an der Saugeinrichtung Nebenluftkanäle ausbildet.

Die Aufgabe der Erfindung besteht darin, eine Saugkanüle bereitzustellen, bei der die Gefahr des Auftretens von Reflux zumindest vermindert, vorzugsweise ausgeräumt ist und die einfacher zu desinfizieren ist.

Diese Aufgabe wird durch eine Saugkanüle nach Anspruch 1 gelöst.

Der an der Saugkanüle vorgesehene Nebenluftkanal gewährleistet neben die Verhinderung oder zumindest Verminderung von Reflux dadurch, dass auch bei einem dichten Anliegen der Saugöffnung an der Mundschleimhaut, welches sonst den Luftstrom durch die Saugkanüle beendet, ein Mindestfluidstrom von der Saugeinrichtung durch die Saugkanüle angesaugt wird.

Damit wird zugleich eine Begrenzung der von der Saugeinrichtung auf die Mundschleimhaut ausgeübten Saugkraft gewährleistet, so dass die Saugkanüle in einfacher Weise wieder von der Mundschleimhaut oder anderen weichen Gewebeteilen gelöst werden kann.

Der zumindest eine Nebenluftkanal ist mit seinem Querschnitt erheblich kleiner als ein Querschnitt des rohrförmigen Grundkörpers der Saugkanüle gewählt. Damit wird erreicht, dass bei freier Saugöffnung lediglich ein kleiner Anteil des von der Saugeinrichtung insgesamt angesaugten Fluidstroms durch den Nebenluftkanal angesaugt wird. Bei einem vollständig dichten Anliegen der Saugöffnung an der Mundschleimhaut gewährleistet der durch den Nebenluftkanal strömende Mindestfluidstrom eine Begrenzung des Unterdrucks in der Saugkanüle auf ein vorgebenes Druckniveau, so dass ein leichtes Ablösen erfolgen kann.

Dabei werden die Nebenluftkanäle durch ein Zusammenwirken des Kupplungsabschnitts der Saugkanüle und einer korrespondierend geformten Kupplungsbuchse der Saugeinrichtung begrenzt. Somit kann auf Hohlräume in der Saugkanüle verzichtet werden, die eine aufwendigere Herstellungstechnik erfordern würden. Damit kann die Saugkanüle einfach und kostengünstig als Massenprodukt hergestellt werden.

Ferner ist eine zuverlässige Funktion des oder der Nebenluftkanäle auch bei einem fehlerhaften Einstecken der Saugkanüle in die Kupplungsbuchse der Saugeinrichtung gewährleistet.

Aufgrund der Einsteckbegrenzung an der Saugkanüle kann eine übliche Kupplungsbuchse einer Saugeinrichtung ohne jegliche Modifikation eingesetzt werden.

Dabei ist vorgesehen, dass bei vollständigem Einstecken der Saugkanüle in die Kupplungsbuchse der Saugeinrichtung bedingt durch die Einsteckbegrenzung ein strömungstechnisch vorteilhafter Ringspalt zwischen der Stirnseite der Saugkanüle und der Kupplungsbuchse gebildet wird. Durch den Ringspalt wird ein turbulenzarmes und somit auch geräuscharmes Einströmen des durch den bzw. die Nebenluftkanäle angesaugten Nebenfluidstromes zum Hauptfluid-stroms hin zur Saugeinrichtung erhalten.

Vorteilhafte Weiterbildungen der Erfindung sind in Unteransprüchen angegeben.

Bei der Gestaltung der Saugkanüle gemäß Anspruch 2 ist vorteilhaft, dass der Nebenluftkanal an einer frei wählbaren Position am Grundkörper angebracht werden kann.

Vorzugsweise sind mehrere Bohrungen am Grundkörper vorgesehen, die beispielsweise in Umfangsrichtung gleichverteilt angeordnet sein können.

Bei einer vorteilhaften Ausführungsform ist zumindest eine Bohrung in einem Bereich der Saugkanüle angeordnet, der von einem Benutzer bei der Verwendung der Saugkanüle mit der Hand ergriffen wird. Dabei kann der Benutzer die Bohrung im Normalfall mit einem oder mehreren Fingern verschlossen halten. Lediglich für den Fall eines Festsaugens gibt der Benutzer die Bohrung durch Abheben des Fingers von der Saugkanüle frei. Damit wird der Nebenluftkanal geöffnet und ein Lösen der Saugkanüle von der Mundschleimhaut wird erleichtert.

Bei einer Saugkanüle, bei der mindestens ein Nebenluftkanal eine Nut an einer nach außen gewandten Oberfläche des Grundkörpers ist, ist vorteilhaft, dass der rohrförmige Grundkörper der Saugkanüle frei von Durchbrechungen ist, die gegebenenfalls ein unerwünschtes Austreten von angesaugter Flüssigkeit, insbesondere an unerwünschten Stellen längs der Saugkanüle, ermöglichen würde. Zudem wird die Stabilität des rohrförmigen Grundkörpers nicht durch Bohrungen oder schlitzförmige Ausnehmungen reduziert, so dass die Saugkanüle mit dünnen Wandstärken verwirklicht werden kann. Darüber hinaus wird vermieden, dass der durch den Nebenluftkanal angesaugte Fluidstrom zu unerwünschten Geräuschen führt, wie dies bei Bohrungen oder Schlitzen im rohrförmigen Grundkörper der Fall sein kann.

Bei der Gestaltung der Saugkanüle gemäß Anspruch 3 ist vorteilhaft, dass der oder die Nebenluftkanäle nicht unmittelbar mit den im Mundraum vorliegenden Flüssigkeiten und/oder Feststoffpartikeln in Kontakt tritt bzw. treten und somit die Gefahr eines Blockierens der Nebenluftkanäle durch diese Flüssigkeiten und/oder Feststoffpartikel reduziert werden kann, wodurch die Funktion der Nebenluftkanäle in Frage gestellt würde. Zudem wird vermieden, dass der Nebenluftkanal oder die Nebenluftkanäle flächig an der Mundschleimhaut anliegen können, so dass dessen bzw. deren Wirkung bei gegebenenfalls zeitgleich verschlossener Saugöffnung aufgehoben wäre.

Bei der Gestaltung der Saugkanüle gemäss Anspruch 4 ist vorteilhaft, dass der oder die Nebenluftkanäle in einfacher Weise im Kunststoffspritzgussverfahren hergestellt werden können. Bei einer Ausrichtung einer Längsachse der nutförmigen Nebenluftkanäle parallel zu einer Trennebene der zur Herstellung verwendeten Kunststoffspritzgussform kann gegebenenfalls auf aufwendige Schieber zur Herstellung der Nebenluftkanäle verzichtet werden.

Bei der Gestaltung der Saugkanüle gemäss Anspruch 5 ist vorteilhaft, dass das Risiko für ein fehlerhaftes Einstecken der Saugkanüle in die Kupplungsbuchse der Saugeinrichtung minimiert wird.

Bei der Gestaltung der Saugkanüle gemäß Anspruch 6 ist vorteilhaft, dass eine symmetrische Einspeisung des Nebenfluidstromes in den Hauptfluidstroms zur Saugeinrichtung gewährleistet ist.

Nachstehend wird ein Ausführungsbeispiel der Erfindung anhand der Zeichnung näher beschrieben. In dieser zeigen:
- Figur 1: eine perspektivische Darstellung einer Saugkanüle mit einer Saugöffnung und einem Kupplungsabschnitt, der mit Nebenluftkanälen versehen ist;
- Figur 2: einer perspektivische Schnittdarstellung des in eine Kupplungsbuchse eingesteckten Kupplungsabschnitts der Saugkanüle gemäß Figur 1;
- Figur 3: einen axialen Schnitt durch die Kupplungsbuchse, wobei zugleich ein eingesteckter Kupplungsabschnitts der Saugkanüle gemäß Figur 1 gezeigt ist;
- Figur 4: eine transversale Schnittdarstellung des in die Kupplungsbuchse eingesteckten Kupplungsabschnitts der Saugkanüle gemäß der Figur 1.

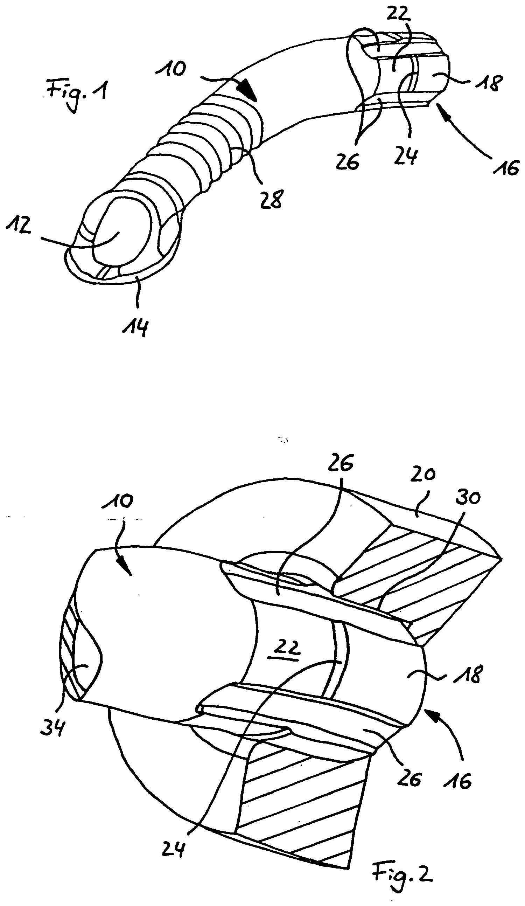

Die in der Figur 1 dargestellte Saugkanüle 10 weist einen rohrförmigen oder hülsenförmigen Grundkörper mit einem im wesentlichen kreisförmigen Querschnitt auf. An dem rohrförmigen Grundkörper ist ein erster Endbereich als Saugöffnung 12 ausgebildet, während ein zweiter Endbereich als Kupplungsabschnitt 16 verwirklicht ist.

Um bei Anwendung der Saugkanüle 10 in der Mundhöhle eines Patienten mechanische Verletzungen zu verhindern, ist die Saugöffnung 12 mit einem angeformten umlaufenden Wulst 14 versehen. Mit seiner nicht näher dargestellten Unterseite bildet der Wulst 14 eine Kontaktfläche, mit der die Saugkanüle 10 an die nicht dargestellte Mundschleimhaut angelegt werden kann. Benachbart zur Saugöffnung 12 ist ein Griffbereich 28 mit umlaufenden Rippen ausgebildet, der zum ergonomischen günstigen und sicheren Halten der Saugkanüle 10 durch einen Benutzer dient.

Der Kupplungsabschnitt 16 bildet zusammen mit einer komplelentären Kupplungsbuchse 20 eine Steckverbindung , über die eine Verbindung zu einer nicht dargestellten dentalen Saugeinrichtung hergestellt wird.

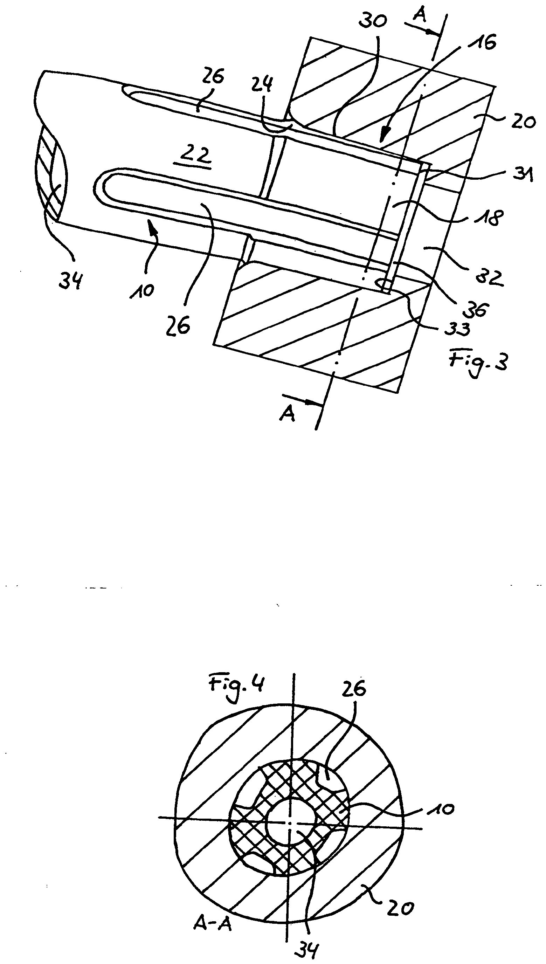

Wie in den Figuren 2 und 3 näher dargestellt, weist der Kupplungsabschnitt 16 einen konusabschnittsförmigen Steckbereich 18 auf, der mit der Kupplungsbuchse 20, die in den Figuren 2 bis 4 näher dargestellt ist, zusammenarbeitet.

An den Steckbereich 18 schließt sich in Richtung auf das freie Kanülenende hin ein im wesentlichen zylindrisch geformter Übergangsabschnitt 22 an, wobei an einer Außenfläche der Saugkanüle 10 zwischen dem Steckbereich 18 und dem Übergangsabschnitt 22 eine umlaufende Ringschulter 24 ausgebildet ist.
Die Ringschulter 24 dient als Einsteckbegrenzung für die Saugkanüle 10 in der Kupplungsbuchse 20. Die Ringschulter 24 ist derart zwischen dem Steckbereich 18 und dem Übergangsabschnitt 22 angeordnet, daß sie beim Einstecken der Saugkanüle 10 in die Kupplungsbuchse 20 gegen einen abgerundeten Endabschnitt 25 einer in der Kupplungsbuchse 20 vorgesehenen Bohrung 30 aufläuft. Damit wird ein zu tiefes Einstecken des Kupplungsabschnitts 16 in die Kupplungsbuchse 20 derart verhindert, dass gewährleistet ist, dass ein Ringkanal 36 zwischen der hinteren Stirnfläche 31 der Saugkanüle 10 und einer Ringschulter 33 der Kupplungsbuchse 20 freibleibt.

An dem Kupplungsabschnitt 16 sind vier nutförmige axiale Nebenluftkanäle 26 mit geringer Tiefe ausgebildet, die in Umfangsrichtung der Saugkanüle 10 gleichverteilt angeordnet sind und die sich ausgehend von der endseitigen Stirnfläche 31 des Steckbereichs 18 über die Ringschulter 24 hinaus axial in Richtung auf die Saugöffnung 12 zu erstrecken.

Wie in der Figur 4 näher dargestellt, weisen die Nebenluftkanäle 26 einen im wesentlichen trapezförmigen Querschnitt auf und sind in einem vom Steckbereich 18 abgewandten Endbereich halbkreisförmig verrundet. Während die als Dichtflächen wirkenden Außenflächen des Steckbereichs 18 im wesentlichen flächig an der konisch ausgeführten Bohrung 30 in der Kupplungs-buchse 20 anliegen, bilden die Nebenluftkanäle 26 so mit der Kupplungsbuchse 20 flache axiale Strömungskanäle für Umgebungsluft, die von der nicht näher dargestellten dentalen Saugeinrichtung immer und ggf. zusätzlich zum lich zum Hauptluftstrom, der durch das Lumen 34 der Kanüle fließt angesaugt wird.

Dabei sind die Nebenluftkanäle 26 derart bemessen, daß die Summe aller Querschnitte der Nebenluftkanäle 26 erheblich kleiner als der freier Querschnitt des Lumens 34 in der Saugkanüle 10 ist. Das Lumen 34 ist seinerseits derart ausgebildet, daß es einen im wesentlichen gleichen Querschnitt wie eine in der Kupplungsbuchse 20 vorgesehene Durchgangsbohrung 32 aufweist, um ein zumindest im wesentlichen ungedrosseltes und laminares Abströmen der angesaugten Umgebungsluft in Richtung der dentalen Saugeinrichtung zu ermöglichen.

Als Werkstoff für die Saugkanüle 10 kann ein Kunststoffmaterial eingesetzt werden, wobei die Herstellung der Saugkanüle 10 im Spritzgiessverfahren erfolgt. Bei dem Kunststoffmaterial handelt es sich vorzugsweise um einen sterilisierbaren Kunststoff.

Bei einer nicht dargestellten Ausführungsform der Saugkanüle kann vorgesehen sein, daß als Werkstoff eine Metalllegierung eingesetzt wird, wobei eine Herstellung der Saugkanüle in diesem Fall als Feinguß-, Schmiede- oder Umformteil vorgesehen sein kann.

## Patentansprüche

1. Saugkanüle (10) für eine dentale Saugeinrichtung mit einem rohrförmigen Grundkörper, bei dem an voneinander abgewandten Endbereichen eine mit einer angeformten umlaufenden Wulst (14) versehene Saugöffnung (12) und ein zur auswechselbaren Anbringung an einer Kupplungsbuchse (20) der Saugeinrichtung vorgesehener Kupplungsabschnitt (16) ausgebildet sind, wobei der Kupplungsabschnitt (16) eine Einsteckbegrenzung (24) aufweist, die derart am Grundkörper angeordnet ist, dass zwischen einer kupplungsseitigen Stirnfläche (31) des Grundkörpers und der Kupplungsbuchse (20) ein ringförmiger Spalt (36) liegt, und wobei die Saugkanüle zumindest einen Nebenluftkanal (26) aufweist, wobei der Nebenluftkanal (26) eine Nut in der Außenfläche des Kupplungsabschnitts (16) ist, die sich ausgehend von der kupplungsseitigen Stirnfläche (31) in Richtung auf die Saugöffnung (12) zu über den Kupplungsabschnitt (16) hinauserstreckt.

2. Saugkanüle nach Anspruch 1, **dadurch gekennzeichnet, dass** mindestens ein Nebenluftkanal eine nicht versehentlich verschließbare Bohrung im Grundkörper ist.

3. Saugkanüle nach einem der vorhergehenden Ansprüche, **dadurch gekennzeichnet, dass** mindestens ein Nebenluftkanal (26) von der Saugöffnung beabstandet ist.

4. Saugkanüle nach einem der vorhergehenden Ansprüche, **dadurch gekennzeichnet, dass** sich mindestens ein Nebenluftkanal (26) in Richtung einer Mittellängsachse des Grundkörpers erstreckt.

5. Saugkanüle nach einem der vorhergehenden Ansprüche, **dadurch gekennzeichnet, dass** die Einsteckbegrenzung (24) als umlaufende Ringschulter ausgebildet ist.

6. Saugkanüle nach einem der vorhergehenden Ansprüche, **dadurch gekennzeichnet, dass** im Bereich des Kupplungsabschnitts (16) mehrere Nebenluftkanäle (26) in Umfangsrichtung gleich verteilt sind.

## Claims

1. Suction cannula (10) for a dental suction device, with a tubular main body on which are formed, at mutually opposite end regions, a suction opening (12), which is provided with an integrally formed peripheral bead (14), and a coupling portion (16), which is provided to be mounted exchangeably on a coupling bush (20) of the suction device, wherein the coupling portion (16) has an insertion stop (24) which is arranged on the main body in such a way that an annular gap (36) lies between a coupling-side end face (31) of the main body and the coupling bush (20), and wherein the suction cannula has at least one auxiliary air channel (26),
**characterized in that**
the auxiliary air channel (26) is a groove in the outer face of the coupling portion (16), which groove, starting from the coupling-side end face (31), extends over the coupling portion (16) in the direction of the suction opening (12).

2. Suction cannula according to Claim 1, **characterized in that** at least one auxiliary air channel is a bore in the main body that cannot inadvertently be closed.

3. Suction cannula according to either of the preceding claims, **characterized in that** at least one auxiliary air channel (26) is spaced apart from the suction opening.

4. Suction cannula according to one of the preceding claims, **characterized in that** at least one auxiliary air channel (26) extends in the direction of a central longitudinal axis of the main body.

5. Suction cannula according to one of the preceding claims, **characterized in that** the insertion stop (24) is configured as a peripheral annular shoulder.

6. Suction cannula according to one of the preceding claims, **characterized in that** a plurality of auxiliary air channels (26) are distributed uniformly in the circumferential direction in the region of the coupling portion (16).

## Revendications

1. Canule d'aspiration (10) pour un dispositif d'aspiration dentaire, dans laquelle la canule d'aspiration (10) présente un corps de base en forme de tube, dans lequel une ouverture d'aspiration (12) munie d'un bourrelet de forme périphérique (14) et une partie de couplage (16) prévue pour l'application échangeable à la douille de couplage (20) du dispositif d'aspiration sont formées dans des régions d'extrémité éloignées l'une de l'autre, dans laquelle la partie de couplage (16) présente une limitation d'engagement (24), qui est disposée sur le corps de base de telle manière qu'il se trouve une fente annulaire (36) entre une face frontale côté couplage (31) du corps de base et la douille de couplage (20), et dans laquelle la canule d'aspiration présente au moins un canal d'air secondaire (26),
**caractérisé en ce que** le canal d'air secondaire (26) est une rainure dans la face extérieure de la partie de couplage (16), qui s'étend à partir de la face frontale côté couplage (31) en direction de l'ouverture d'aspiration (12) jusqu'au-delà de la partie de couplage (16).

2. Canule d'aspiration selon la revendication 1, **caractérisée en ce qu'**au moins un canal d'air secondaire est un perçage qui ne peut pas être fermé par erreur dans le corps de base.

3. Canule d'aspiration selon l'une quelconque des revendications précédentes, **caractérisée en ce qu'**au moins un canal d'air secondaire (26) est espacé de l'ouverture d'aspiration.

4. Canule d'aspiration selon l'une quelconque des revendications précédentes, **caractérisée en ce qu'**au moins un canal d'air secondaire (26) s'étend dans la direction d'un axe longitudinal central du corps de base.

5. Canule d'aspiration selon l'une quelconque des revendications précédentes, **caractérisée en ce que** la limitation d'engagement (24) est réalisée sous la forme d'un épaulement annulaire périphérique.

6. Canule d'aspiration selon l'une quelconque des revendications précédentes, **caractérisée en ce que** plusieurs canaux d'air secondaire (26) sont également répartis en direction périphérique dans la région de la partie de couplage (16).
